(19) Europäisches Patentamt
European Patent Office
Office européen des brevets

(11) **EP 4 643 976 A1**

(12) **EUROPEAN PATENT APPLICATION**
published in accordance with Art. 153(4) EPC

(43) Date of publication:
**05.11.2025 Bulletin 2025/45**

(21) Application number: **23911409.3**

(22) Date of filing: **13.11.2023**

(51) International Patent Classification (IPC):
***B01D 53/14*** *(2006.01)* ***C08G 65/02*** *(2006.01)*

(52) Cooperative Patent Classification (CPC):
**B01D 53/14; C08G 65/02**

(86) International application number:
**PCT/JP2023/040729**

(87) International publication number:
**WO 2024/142625 (04.07.2024 Gazette 2024/27)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **27.12.2022 JP 2022209561**

(71) Applicant: **AGC INC.**
**Chiyoda-ku,**
**Tokyo 1008405 (JP)**

(72) Inventors:
- **IKAWA, Seiya**
  **Tokyo 100-8405 (JP)**
- **KOGUCHI, Ryohei**
  **Tokyo 100-8405 (JP)**
- **SUZUKI, Toyokazu**
  **Tokyo 100-8405 (JP)**
- **ARAI, Takeaki**
  **Tokyo 100-8405 (JP)**
- **YAMAGUCHI, Ryohei**
  **Tokyo 100-8405 (JP)**

(74) Representative: **Müller-Boré & Partner Patentanwälte PartG mbB**
**Friedenheimer Brücke 21**
**80639 München (DE)**

(54) **ACIDIC GAS REMOVAL AGENT, ACIDIC GAS REMOVAL METHOD, ACIDIC GAS ABSORPTION DEVICE, AND CLEANING DEVICE**

(57) Provided are an acidic gas removing agent with smaller variation in amounts of carbon dioxide absorption even in the coexistence of water in removing carbon dioxide in a gas, an acidic gas removing method, an absorption device provided with the acidic gas removing agent, and an acidic gas cleaning device. Used is an acidic gas removing agent containing one or more selected from the group consisting of a hydroxy group-containing compound and a derivative of the hydroxy group-containing compound each having a number-average molecular weight of less than 500, containing a constituent unit having 3 or more carbon atoms and one or more oxygen atoms, and having a solubility parameter (LogS) value of - 2.25 or less.

EP 4 643 976 A1

## Description

Technical Field

The present invention relates to an acidic gas removing agent that removes an acidic gas, in particular, carbon dioxide in a gas through a physical absorption method.

Background Art

The present invention is applied for recovering an acidic gas, in particular, carbon dioxide from a gas at a pressure equal to or higher than the atmospheric pressure. This gas is generally a synthesis gas produced through gasification of coal or reforming of natural gas.

Carbon dioxide constitutes greenhouse gases, which are thought to be a cause of the global warming. As can be seen from the effectuation of the Kyoto Protocol, reducing emissions of carbon dioxide in the atmosphere has been demanded in the industry as well as in terms of the social context.

Capturing and storing carbon dioxide in places where huge amounts of carbon dioxide are generated such as large-scale power plants and heavy industries is one of most promising means to achieve the goal for greenhouse gas emission reduction on a global scale.

A physical absorption method and a chemical absorption method are known as industrial methods for capturing carbon dioxide. The chemical absorption method is a method of absorbing and capturing carbon dioxide through chemical reaction, and uses an acidic gas removing agent under low pressure (normal pressure). The physical absorption method is a method of absorbing and capturing carbon dioxide under high pressure, and uses an acidic gas removing agent under high pressure. For the acidic gas removing agent to be used in the physical absorption method, liquids capable of physically dissolving carbon dioxide are used. Carbon dioxide becomes more soluble in a liquid and the amount of carbon dioxide absorption in the liquid increases as the partial pressure of carbon dioxide increases, and hence the physical absorption method is particularly suitable for high-pressure processes.

For example, PTL1 discloses use of polyethylene glycol dimethyl ether as an acidic gas removing agent.

Citation List

Patent Literature

PTL1: JP 59-216831 A

Summary of Invention

Technical Problem

However, conventional acidic gas removing agents as disclosed in PTL1 tend to give reduced amounts of carbon dioxide absorption in the coexistence of water. Water vapor may be involved in actual industrial processes, and thus an acidic gas removing agent with smaller variation in amounts of carbon dioxide absorption even in the coexistence of water has been demanded.

The present invention has been made to solve such a problem, and provides an acidic gas removing agent with smaller variation in amounts of carbon dioxide absorption even in the coexistence of water in removing carbon dioxide in a gas; an acidic gas removing method; an acidic gas absorption device, and a cleaning device.

Solution to Problem

The present invention is based on examination on an acidic gas removing agent capable of well absorbing carbon dioxide even in the coexistence of water to find that a specific parameter indicating solubility in water largely relates to amounts of carbon dioxide absorption.

Specifically, the present invention is [1] to [13] in the following.

[1] An acidic gas removing agent for removing carbon dioxide in a gas, wherein the acidic gas removing agent comprises one or more compounds selected from the group consisting of a hydroxy group-containing compound and a derivative of the hydroxy group-containing compound, and each of the hydroxy group-containing compound and the derivative of the hydroxy group-containing compound has a number-average molecular weight of less than 500, comprises a constituent unit having 3 or more carbon atoms and one or more oxygen atoms, and has a solubility

parameter (LogS) value of -2.25 or less.

[2] The acidic gas removing agent according to [1], wherein the constituent unit is a constituent unit based on an alkylene oxide having 3 or more carbon atoms.

[3] The acidic gas removing agent according to [2], wherein the alkylene oxide is propylene oxide.

[4] The acidic gas removing agent according to any one of [1] to [3], wherein the derivative of the hydroxy group-containing compound is a compound resulting from conversion of a hydroxy group terminus of the hydroxy group-containing compound into the following formula (1):

-O-R (1)

wherein, in the formula (1), R represents a monovalent organic group having 1 to 4 carbon atoms, being optionally branched, optionally having an unsaturated bond, and optionally comprising a nitrogen atom and an oxygen atom.

[5] The acidic gas removing agent according to any one of [1] to [4], wherein a and b satisfy the following expressions (2) and (3):

$$a \geq 100 \quad (2)$$

$$b / a \geq 0.80 \quad (3)$$

wherein a represents an amount of carbon dioxide absorption per unit mass of the acidic gas removing agent (g/kg), and b represents an amount of carbon dioxide absorption per unit mass of a mixture of 90% by mass of the acidic gas removing agent and 10% by mass of water (g/kg), each at 30°C and 3 MPa.

[6] The acidic gas removing agent according to any one of [1] to [5], being free from an amine compound.

[7] The acidic gas removing agent according to any one of [1] to [6], wherein the acidic gas removing agent is used for removing carbon dioxide in a gas through a physical absorption method.

[8] The acidic gas removing agent according to any one of [1] to [7], wherein the acidic gas removing agent is liquid at room temperature.

[9] An acidic gas removing method, wherein the acidic gas removing agent according to any of [1] to [8] is brought into contact with the gas to remove carbon dioxide in the gas.

[10] The acidic gas removing method according to [9], wherein the acidic gas removing agent is brought into contact with the gas at a temperature ranging from 0 to 200°C.

[11] The acidic gas removing method according to [9] or [10], wherein the acidic gas removing agent is brought into contact with the gas at a pressure ranging from 0.7 to 7.0 MPa.

[12] An absorption device packed with the acidic gas removing agent according to any of [1] to [8].

[13] A cleaning device provided with the absorption device according to [12].

## Advantageous Effects of Invention

The present invention provides an acidic gas removing agent with smaller variation in amounts of carbon dioxide absorption even in the coexistence of water in removing carbon dioxide in a gas, and an acidic gas removing method using the acidic gas removing agent.

The acidic gas removing agent of the present invention is useful as an acidic gas removing agent for removing carbon dioxide in a gas that is emitted from a thermal power plant or the like and contains a huge amount of carbon dioxide and water vapor.

## Description of Embodiments

The meanings and definitions of terms in the present specification are as follows.

"Removing carbon dioxide in a gas" means not only the case that carbon dioxide in a gas is removed and the carbon dioxide concentration of the gas reaches 0 vol%, but also the case that the carbon dioxide concentration of a gas is reduced.

"Pressure" means absolute pressure when MPa is shown as the unit, and gauge pressure when MPaG is shown as the unit.

The term "hydroxy group-containing compound" is a collective term for compounds having at least one hydroxy group in one molecule.

A "derivative of a hydroxy group-containing compound" is a product formed through esterification, etherification, or urethanization of some or all of the hydroxy groups of a hydroxy group-containing compound.

Each numerical range expressed with "to" is such a numerical range that the numerical values before and after "to" are the lower limit value and the upper limit value, respectively.

The "carbon dioxide absorption ratio" is the ratio of the amount of carbon dioxide absorption in the coexistence of water to the amount of carbon dioxide absorption not in the coexistence of water, and specifically means b / a, wherein a represents the amount of carbon dioxide absorption per unit mass of the acidic gas removing agent (g/kg), and b represents the amount of carbon dioxide absorption per unit mass of a mixture of 90% by mass of the acidic gas removing agent and 10% by mass of water (g/kg), each at 30°C and 3 MPa.

"Room temperature" means a temperature range of 15 to 25°C.

[Acidic gas removing agent]

The acidic gas removing agent of the present invention is an acidic gas removing agent for removing carbon dioxide in a gas, and characterized by containing one or more compounds selected from the group consisting of a hydroxy group-containing compound and a derivative of the hydroxy group-containing compound, wherein each of the hydroxy group-containing compound and the derivative of the hydroxy group-containing compound has a number-average molecular weight of less than 500, contains a constituent unit having 3 or more carbon atoms and one or more oxygen atoms, and has a solubility parameter (LogS) value of -2.25 or less. The acidic gas removing agent can give smaller variation in amounts of carbon dioxide absorption even if water is coexisting in a gas.

The "solubility parameter (LogS)" used in the present invention is a parameter indicating the limit of the soluble amount of a compound in water. The LogS of a compound is calculated by using a LogS prediction model. This LogS prediction model is constructed with a machine learning approach described later.

The LogS of a compound is given through the following procedure of (1) to (3).

(1) The terminal structure of a compound is specified through analysis by $^1$H-NMR and $^{13}$C-NMR, the formula weight of the terminal structure is subtracted from the number-average molecular weight, and the resulting value is then divided by the molecular weight of a constituent unit of the compound to give an integer value (rounded) as the number of repeating units. On the basis of the terminal structure and the number of repeating units, the chemical structural formula of the compound is determined by using Chemdraw Prime 17.1, which is software of chemical structural formula drawing programs.

(2) The chemical structural formula determined for the compound is stringified into alphanumeric characters in ASCII codes (246 descriptors) according to the notation SMILES, and the information on the compound (molecule) is converted (digitized) into characteristic quantities by using the molecular descriptor calculation software mordred 1.2.0.

(3) With use of the characteristic quantities of the compound (molecule) given by the conversion, the LogS value of the compound is obtained from a LogS prediction model constructed as described later.

The LogS prediction model is constructed through the following machine learning approach: this machine learning approach (algorithm) uses sklearn.ensemble.RandomForestRegressor of Scikit-learn 0.23.2 with default arguments, and uses, as teacher data, a dataset obtained with the function sklearn.model_selection.train_test_split (test_size = 0.20, random_state = 42) from data of AqSolDB disclosed in Sorkun, M. C., et al., Scientific Data vol. 6, 143 (2019).

The LogS prediction model thus constructed has been validated to be a high-precision model that exhibits a coefficient of determination of 0.80 or more for data of AqSolDB that have not been used for learning.

As indicators of the compatibility of a compound with water, for example, the Hansen solubility parameter (HSP value) and the octanol/water partition coefficient (LogP) have been known. Molecular size is not sufficiently considered for HSP values, and LogP is an indicator of which of water and octanol a compound more dissolves in, and it cannot be said that the two are exact indicators of solubility in water.

By contrast, the solubility parameter (LogS) in the present invention is a parameter just indicating the limit of the soluble amount of a compound in water, and has higher precision for evaluation of compatibility with water than HSP values and LogP.

In evaluating the acidic gas removing agent on the carbon dioxide absorption ratio, the limit of the soluble amount of the acidic gas removing agent in water is important, and the solubility parameter (LogS) of a hydroxy group-containing compound or a derivative thereof is considered to be a more proper parameter than the HSP value and the partition coefficient LogP that have been known.

The number-average molecular weight of a hydroxy group-containing compound is defined as a molecular weight in terms of hydroxyl value. The molecular weight in terms of hydroxyl value is a molecular weight calculated from the expression 56,100 / (hydroxyl value of hydroxy group-containing compound) × (number of hydroxy groups in hydroxy group-containing compound), wherein the hydroxyl value of a hydroxy group-containing compound is calculated in accordance with JIS K 1557-1:2007.

The number-average molecular weight of a derivative of a hydroxy group-containing compound is defined as a molecular weight determined through gel permeation chromatography (GPC) using polystyrene as standards.

The LogS of the acidic gas removing agent is preferably -2.25 or less, more preferably -6.00 to -2.25, even more preferably -6.00 to -3.00, and particularly preferably -6.00 to -3.50. Larger numerical values of LogS indicate higher compatibility with water, and smaller numerical values of LogS indicate lower compatibility with water. A small numerical value of LogS results in low compatibility with water, and LogS of -2.25 or less tends to allow separation from water and results in larger amounts of carbon dioxide absorption in the coexistence of water, thus being preferable.

For a tendency to exhibit larger carbon dioxide absorption ratios, the compound having a number-average molecular weight of less than 500, containing a constituent unit having 3 or more carbon atoms and one or more oxygen atom, and having a LogS value of -2.25 or less is preferably one containing a constituent unit based on an alkylene oxide having 3 or more carbon atoms. For a tendency to exhibit much larger carbon dioxide absorption ratios, the alkylene oxide is more preferably tetrahydrofuran, 1,2-butylene oxide, or propylene oxide, and even more preferably propylene oxide.

In the case that the compound is a hydroxy group-containing compound, at least one selected from the group consisting of polyether monool, polyether polyol, polyester polyol, and polycarbonate diol is preferable as the hydroxy group-containing compound. For the hydroxy group-containing compound, one of those may be used singly; otherwise, two or more thereof may be used in combination.

As the hydroxy group-containing compound, polyether monool, polyether polyol, polyester polyol, and polycarbonate diol are preferable for availability, polyether monool and polyether polyol are more preferable, and polypropylene glycol and polyoxyethylenepolyoxypropylene glycol are even more preferable.

Preferable as the polyether monool is a product obtained by subjecting a cyclic ether to ring-opening addition polymerization reaction with an initiator containing a group having one active hydrogen atom in one molecule.

Such a group containing an active hydrogen atom in the initiator is preferably a hydroxy group. Specific examples of the initiator include monohydric alcohols such as methanol, ethanol, 2-propanol, n-butanol, tert-butanol, allyl alcohol, isobutanol, 2-ethylhexanol, decyl alcohol, lauryl alcohol, tridecanol, cetyl alcohol, stearyl alcohol, oleyl alcohol, ethylene glycol monomethyl ether, ethylene glycol monoethyl ether, ethylene glycol monopropyl ether, ethylene glycol monoisopropyl ether, ethylene glycol monobutyl ether, ethylene glycol monoisobutyl ether, ethylene glycol mono-tert-butyl ether, ethylene glycol monohexyl ether, ethylene glycol monophenyl ether, diethylene glycol monomethyl ether, diethylene glycol monoethyl ether, diethylene glycol monopropyl ether, diethylene glycol monobutyl ether, diethylene glycol monobenzyl ether, triethylene glycol monomethyl ether, triethylene glycol monoethyl ether, triethylene glycol monobutyl ether, tetraethylene glycol monomethyl ether, and tetraethylene glycol monobutyl ether. Preferable for maintaining large amounts of carbon dioxide absorption in the coexistence of water are methanol, ethanol, 2-propanol, n-butanol, tert-butanol, allyl alcohol, isobutanol, ethylene glycol monomethyl ether, ethylene glycol monoethyl ether, ethylene glycol monopropyl ether, ethylene glycol monoisopropyl ether, ethylene glycol monobutyl ether, ethylene glycol monoisobutyl ether, ethylene glycol mono-tert-butyl ether, diethylene glycol monomethyl ether, diethylene glycol monoethyl ether, and diethylene glycol monobutyl ether. For the initiator, one of those may be used singly; otherwise, two or more thereof may be used in combination.

Preferable as the polyether polyol is a product obtained by subjecting a cyclic ether to ring-opening addition polymerization reaction with an initiator having at least two active hydrogen atoms in one molecule. Examples of the polyether polyol include polypropylene glycol, polyoxyethylenepolyoxypropylene glycol, polyoxytetramethylene glycol, and addition polymer of polyoxytetramethylene glycol and alkylene oxide.

The group containing an active hydrogen atom in the initiator is preferably a hydroxy group. Specific examples of the initiator include water; diols such as ethylene glycol, diethylene glycol, propylene glycol, dipropylene glycol, tripropylene glycol, 1,3-propanediol, 1,3-butanediol, 1,4-butanediol, 1,6-hexanediol, 1,4-cyclohexanediol, bisphenol A, bisphenol F, bisphenol S, and resorcin; and trihydric or higher alcohols such as glycerin, diglycerin, trimethylolpropane, pentaerythritol, dipentaerythritol, tripentaerythritol glucose, sorbitol, dextrose, fructose, sucrose, methylglucoside, trehalose, novolac, resole, and castor oil. Preferable for maintaining large amounts of carbon dioxide absorption in the coexistence of water are water, ethylene glycol, diethylene glycol, propylene glycol, dipropylene glycol, tripropylene glycol, glycerin, trimethylolpropane, pentaerythritol, and sorbitol. For the initiator, one of those may be used singly; otherwise, two or more thereof may be used in combination.

The cyclic ether to be used for producing polyether monool or polyether polyol is preferably an organic compound having 3 to 20 carbon atoms with cyclic ether structure. Examples of the organic compound having 3 to 20 carbon atoms with cyclic ether structure include compounds having an epoxy group such as propylene oxide, 1,2-butylene oxide, 2,3-butylene oxide, $\alpha$-olefin oxide having 5 to 20 carbon atoms, styrene oxide, cyclopentene oxide, cyclohexene oxide, epichlorohydrin, glycidyl alkyl ether, and glycidyl alkyl ester; oxetane, and tetrahydrofuran. The cyclic ether to be used for producing polyether monool or polyether polyol is preferably tetrahydrofuran, 1,2-butylene oxide, or propylene oxide, and more preferably propylene oxide. For the cyclic ether to be used for producing polyether monool or polyether polyol, one of those may be used singly; otherwise, two or more thereof may be used in combination.

The ring-opening addition polymerization reaction of the cyclic ether is preferably performed with use of a

catalyst, and examples of the catalyst include composite metal cyanide complex catalysts; alkaline catalysts such as sodium hydroxide, potassium hydroxide, and cesium hydroxide; Ziegler-Natta catalysts consisting of an organoaluminum compound and a transition metal compound; metal porphyrin catalysts, which are complexes obtained by reacting porphyrin; phosphazene catalysts; imino group-containing phosphazenium salts; tris(pentafluorophenyl)borane; catalysts consisting of a metal salen complex; and catalysts consisting of reduced Robson-type macrocyclic ligands. For the catalyst, one of those may be used singly; otherwise, two or more thereof may be used in combination.

For production of polyether monool or polyether polyol by ring-opening addition polymerization with a catalyst, production conditions described in, for example, WO 2003/062301, WO 2004/067633, JP 2004-269776 A, JP 2005-15786 A, WO 2013/065802, or JP 2015-10162 A can be employed.

Preferable as the polyester polyol is a product obtained by subjecting a dibasic acid component or a dialkyl ester of a dibasic acid component and an alcohol to esterification reaction or transesterification reaction. Examples of the polyester polyol include polyester polyol consisting of a condensate of a dibasic acid and an alcohol having two or more hydroxy groups, and polycaprolactone polyol, which is a ring-opened polymer of a cyclic ester compound. A known method can be applied to the esterification reaction or transesterification reaction for producing polyester polyol.

Examples of the dibasic acid component or the dialkyl ester of a dibasic acid component include aliphatic dibasic acids such as succinic acid, glutaric acid, adipic acid, pimelic acid, suberic acid, azelaic acid, sebacic acid, dodecanedioic acid, brassylic acid, and dimer acid or dialkyl esters of these dibasic acids such as dimethyl esters, diethyl esters, dipropyl esters, and dibutyl esters thereof; alicyclic dicarboxylic acids such as 1,4-cyclohexanedicarboxylic acid or dialkyl esters of these dibasic acids such as dimethyl esters, diethyl esters, dipropyl esters, and dibutyl esters thereof; and aromatic dibasic acids such as phthalic acid, isophthalic acid, terephthalic acid, and naphthalenedicarboxylic acid or dialkyl esters of these dibasic acids such as dimethyl esters, diethyl esters, dipropyl esters, and dibutyl esters thereof.

Examples of the alcohol to be used for producing polyester polyol include diols such as ethylene glycol, diethylene glycol, propylene glycol, dipropylene glycol, triethylene glycol, tripropylene glycol, neopentyl glycol, 1,4-butanediol, and 1,6-hexanediol; and trihydric or higher alcohols such as glycerin, trimethylolpropane, trimethylolethane, pentaerythritol, sorbitol, and sucrose.

The esterification reaction or transesterification reaction for producing polyester polyol is preferably performed in the presence of a catalyst. Examples of the catalyst include titanium compounds such as tetrabutyl titanate, tetraisopropyl titanate, tetra-2-ethylhexyl titanate, and titanium acetylacetonate; tin compounds such as dibutyltin oxide, methylphenyltin oxide, and hexaethyltin oxide; and magnesium compounds such as magnesium carbonate, magnesium oxide, and magnesium alkoxide. Among them, titanium compounds are preferable, and tetrabutyl titanate and titanium acetylacetonate are more preferable. For the catalyst, one of those may be used singly; otherwise, two or more thereof may be used in combination.

Examples of polycarbonate diol include condensates of an alcohol and a carbonate component, and reaction products of an alcohol, together with a cyclic ester, and a carbonate compound.

Examples of the alcohol to be used for producing polycarbonate diol include diols. Specific examples of the diols include noncyclic aliphatic diols having no side chain such as ethylene glycol, 1,3-propanediol, 1,4-butanediol, 1,5-pentanediol, 1,6-hexanediol, 1,7-heptanediol, 1,8-octanediol, 1,9-nonanediol, 1,10-decanediol, 1,11-undecanediol, 1,12-dodecanediol, 1,13-tridecanediol, 1,14-tetradecanediol, 1,16-hexadecanediol, 1,18-octadecanediol, and 1,20-eicosanediol; noncyclic aliphatic diols having a side chain such as 2-methyl-1,8-octanediol, 2,2-dimethyl-1,3-propanediol, 2-ethyl-1,3-hexanediol, 2-ethyl-1,6-hexanediol, 2-methyl-1,4-butanediol, 2-methyl-1,3-propanediol, 3-methyl-1,5-pentanediol, 2,4-dimethyl-1,5-pentanediol, and 2,4-diethyl-1,5-pentanediol; cyclic aliphatic diols such as 1,3-cyclohexanediol, 1,3-cyclohexanedimethanol, 1,4-cyclohexanediol, 1,4-cyclohexanedimethanol, isosorbide, 2-bis(4-hydroxycyclohexyl)-propane, 2,7-norbornanediol, 2,3-norbornanediol, tetrahydrofuran-2,2-dimethanol, and 2,5-bis(hydroxymethyl)-1,4-dioxane; and aromatic diols such as 5,5-bis(hydroxymethyl)-2-phenyl-1,3-dioxane, p-xylene glycol, p-tetrachloroxylenediol, 1,4-bis(hydroxyethoxy)benzene, and 2,2-bis[(4-hydroxyethoxy)phenyl]propane. For the alcohol, one of those may be used singly; otherwise, two or more thereof may be used in combination.

Examples of the carbonate compound to be used for producing polycarbonate diol include dimethyl carbonate, diethyl carbonate, dipropyl carbonate, dibutyl carbonate, diphenyl carbonate, ethylene carbonate, trimethylene carbonate, propylene carbonate, 1,2-butylene carbonate, and neopentylene carbonate. Among them, dimethyl carbonate, diethyl carbonate, diphenyl carbonate, and ethylene carbonate are preferable for easiness in reaction with the alcohol and the cyclic ester. For the carbonate compound, one of those may be used singly; otherwise, two or more thereof may be used in combination.

Examples of the cyclic ester to be used for producing polycarbonate diol include ε-caprolactone, β-propiolactone, β-methyl-β-propiolactone, δ-valerolactone, glycolide, and lactide. Among them, ε-caprolactone is preferable. For the cyclic ester, one of those may be used singly; otherwise, two or more thereof may be used in combination.

Production of polycarbonate diol can be performed by applying a method described in, for example, JP 2012-77280 A, JP 2014-080590 A, JP 2015-91937 A, JP 2001-270938 A, JP 2010-126591 A, JP H2-289616 A, or JP H4-239023 A.

The number-average molecular weight of the hydroxy group-containing compound to be used for the acidic gas removing agent of the present invention is less than 500, preferably 100 to 499, more preferably 150 to 499, and particularly preferably 300 to 499. The number-average molecular weight of less than 500 results in low viscosity, and allows the acidic gas removing agent to be handled with ease.

In the case that the compound is a derivative of a hydroxy group-containing compound, examples of the derivative of a hydroxy group-containing compound include derivatives of polyether monool, polyether polyol, polyester polyol, and polycarbonate diol, in particular, a product obtained by esterification, etherification, or urethanization of some or all of the hydroxy groups of polyether monool, polyether polyol, polyester polyol, or polycarbonate diol. The derivative of a hydroxy group-containing compound is preferably a compound resulting from conversion of a hydroxy group terminus of the hydroxy group-containing compound into the following formula (1):

-O-R (1).

In the formula (1), R represents a monovalent organic group having 1 to 4 carbon atoms, being optionally branched, optionally having an unsaturated bond, and optionally containing at least either one of a nitrogen atom and an oxygen atom. R is even more preferably a hydrocarbon group having 1 to 4 carbon atoms.

R is particularly preferably at least one selected from the group consisting of a linear or branched alkyl group having 1 to 4 carbon atoms and an allyl group.

As described above, examples of the derivative of a hydroxy group-containing compound include a product obtained by esterification, etherification, or urethanization of some or all of the hydroxy groups of a hydroxy group-containing compound. An example thereof is a derivative obtained through conversion of a hydroxy group into a methoxy group by adding sodium hydroxide and methanol to polyether monool to cause terminal alcoholate formation and then reacting the resultant and methyl chloride.

For the esterification, etherification, or urethanization of some or all of the hydroxy groups of a hydroxy group-containing compound, a common method that is used for esterification reaction, etherification reaction, or urethanization reaction can be applied.

The number-average molecular weight of the derivative of a hydroxy group-containing compound is less than 500, preferably 100 to 499, more preferably 150 to 498, and particularly preferably 300 to 497. The number-average molecular weight of less than 500 results in low viscosity, and allows the acidic gas removing agent to be handled with ease.

Examples of compounds to be reacted with hydroxy groups in esterification, etherification, or urethanization of some or all of the hydroxy groups of a hydroxy group-containing compound include monohydric alcohols, carboxylic acids, monoisocyanate compounds, and halogenated alkyls.

Preferable as the monohydric alcohol are monohydric alcohols having 1 to 30 carbon atoms, and examples thereof include linear alkyl alcohols such as methanol, ethanol, propanol, n-butanol, pentanol, hexanol, octanol, nonanol, decanol, undecanol, dodecanol, tridecanol, tetradecanol, pentadecanol, hexadecanol, heptadecanol, octadecanol, nonadecanol, eicosanol, heneicosanol, docosanol, tricosanol, tetracosanol, pentacosanol, hexacosanol, heptacosanol, octacosanol, nonacosanol, and triacontanol; branched alkyl alcohols such as isopropanol, isobutanol, isohexanol, 2-ethylhexanol, isononanol, isodecanol, isododecanol, isotridecanol, isotetradecanol, isotriacontanol, isohexadecanol, isoheptadecanol, isooctadecanol, isononadecanol, isoeicosanol, isoheneicosanol, isodocosanol, isotricosanol, isotetracosanol, isopentacosanol, isohexacosanol, isoheptacosanol, isooctacosanol, isononacosanol, and isopentadecanol; linear alkenyl alcohols such as tetradecenol, hexadecenol, heptadecenol, octadecenol, and nonadecenol; branched alkenyl alcohols such as isohexadecenol and isooctadecenol; cyclic alkyl alcohols such as cyclopentanol and cyclohexanol; and phenols such as phenol, benzyl alcohol, monostyrenated phenol, distyrenated phenol, and tristyrenated phenol.

Examples of the carboxylic acids include formic acid, acetic acid, propionic acid, isopropionic acid, butyric acid, isobutyric acid, pivalic acid, valeric acid, and isovaleric acid.

Examples of the monoisocyanate compounds include methyl isocyanate, ethyl isocyanate, phenyl isocyanate, cyclohexyl isocyanate, and benzyl isocyanate.

Examples of the halogenated alkyls include alkyl chlorides such as methyl chloride, ethyl chloride, vinyl chloride, n-propyl chloride, isopropyl chloride, allyl chloride, n-butyl chloride, isobutyl chloride, sec-butyl chloride, tert-butyl chloride, 2-chloroethyl methyl ether, 2-chloroethyl ethyl ether, 2-chloroethyl propyl ether, and 2-chloroethyl butyl ether; alkyl bromides such as methyl bromide, ethyl bromide, vinyl bromide, n-propyl bromide, isopropyl bromide, allyl bromide, n-butyl bromide, isobutyl bromide, sec-butyl bromide, tert-butyl bromide, 2-bromoethyl methyl ether, 2-bromoethyl ethyl ether, 2-bromoethyl propyl ether, and 2-bromoethyl butyl ether; and alkyl iodides such as methyl iodide, ethyl iodide, vinyl iodide, n-propyl iodide, isopropyl iodide, allyl iodide, n-butyl iodide, isobutyl iodide, sec-butyl iodide, tert-butyl iodide, and 2-iodoethyl methyl ether. Preferable for efficiently converting a hydroxy group terminus are methyl chloride, allyl chloride, methyl bromide, allyl bromide, methyl iodide, and allyl iodide.

The acidic gas removing agent of the present invention does not cause chemical reaction but causes physical adsorption of an acidic gas, and hence is preferably used for removing an acidic gas through a physical absorption method.

The acidic gas removing agent is preferably free from an amine compound because amine compounds make it difficult to apply the acidic gas removing agent to acidic gases containing hydrogen sulfide or sulfur oxide (SOx). The presence or absence of an amine compound in the acidic gas removing agent can be checked by gas chromatography (GC analysis), and if an amine compound is present below the detection lower limit and thus undetectable, the acidic gas removing agent is determined to be free from an amine compound.

The acidic gas removing agent is preferably liquid at room temperature for removing an acidic gas through a physical absorption method.

The total content ratio of the one or more compounds selected from the group consisting of a hydroxy group-containing compound and a derivative of such a hydroxy group-containing compound in the acidic gas removing agent of the present invention can be appropriately set according to the mode of usage, but is typically 1 to 100% by mass, and, for cost-benefit performance, preferably 5 to 100% by mass, and more preferably 5 to 95% by mass.

An additive such as a defoamer, a dispersion stabilizer, a surfactant, a viscosity modifier, and a corrosion inhibitor can also be added into the acidic gas removing agent.

For the acidic gas removing agent of the present invention, a and b satisfy the following expressions (2) and (3):

$$a \geq 100 \qquad (2)$$

$$b / a \geq 0.80 \qquad (3)$$

wherein a represents the amount of carbon dioxide absorption per unit mass of the acidic gas removing agent (g/kg), and b represents the amount of carbon dioxide absorption per unit mass of a mixture of 90% by mass of the acidic gas removing agent and 10% by mass of water (g/kg), each at 30°C and 3 MPa.

If the acidic gas removing agent has a carbon dioxide absorption ratio (b / a) of 0.80 or more, it can be said that the variation in amounts of carbon dioxide absorption is small even in the coexistence of water. The carbon dioxide absorption ratio is more preferably 0.80 to 0.99, and even more preferably 0.85 to 0.99.

If the amount of carbon dioxide absorption per unit mass of the acidic gas removing agent, a, is 100 g/kg or more, it can be said that carbon dioxide is well removed not in the coexistence of water. The amount of carbon dioxide absorption, a, is more preferably 100 to 300 g/kg, and even more preferably 125 to 300 g/kg.

If the amount of carbon dioxide absorption per unit mass of a mixture of 90% by mass of the acidic gas removing agent and 10% by mass of water, b, is 100 g/kg or more, it can be said that carbon dioxide is well removed in the coexistence of water. The amount of carbon dioxide absorption, b, is preferably 100 to 300 g/kg, and more preferably 110 to 300 g/kg.

The acidic gas removing agent of the present invention has a small numerical value of LogS, and low compatibility with water, and thus being less likely to give reduced amounts of carbon dioxide absorption in the coexistence of water compared to those not in the coexistence of water. Accordingly, the variation in amounts of carbon dioxide absorption between the presence and absence of coexisting water is small, and hence the acidic gas removing agent of the present invention has a high carbon dioxide absorption ratio. Smaller variation in the carbon dioxide absorption ratio results in constant absorption of carbon dioxide in terms of quantity without being influenced by coexisting water, leading to easiness in controlling carbon dioxide removal treatment.

For an acidic gas removing agent having a large numerical value of LogS, and thus being highly compatible with water, on the other hand, hydration is expected to reduce the number of adsorption sites of the acidic gas removing agent for carbon dioxide and result in smaller amounts of carbon dioxide absorption in the coexistence of water, leading to a lower carbon dioxide absorption ratio. The variation in the carbon dioxide absorption ratio between the presence and absence of coexisting water tends to be large in acidic gas removing agents highly compatible with water.

[Acidic gas removing method]

The acidic gas removing method of the present invention may be, for example, a method of adding the acidic gas removing agent of the present invention into an acidic gas containing carbon dioxide. Alternatively, the acidic gas removing method of the present invention may be a method of continuously removing an acidic gas containing carbon dioxide by circulating the acidic gas in a container packed with the acidic gas removing agent of the present invention, or a method of removing an acidic gas containing carbon dioxide in a batch process by filling a container packed with the acidic gas removing agent of the present invention with the acidic gas.

To increase the contacting efficiency of the acidic gas removing agent of the present invention and an acidic gas containing carbon dioxide, the acidic gas removing agent and the acidic gas containing carbon dioxide may be brought into contact by using a porous plate, a bubble cap tray, or the like in a packed tower. Alternatively, the acidic gas removing agent and the acidic gas containing carbon dioxide may be brought into contact by circulating the acidic gas containing carbon dioxide while the acidic gas removing agent is sprayed, or brought into contact in such a manner that fine bubbles are

formed with the acidic gas containing carbon dioxide and the bubbles are brought into contact with the acidic gas removing agent of the present invention.

In the method for removing carbon dioxide with use of the acidic gas removing agent of the present invention, the acidic gas removing agent is added in such a manner that the total amount of the one or more compounds selected from the group consisting of a hydroxy group-containing compound and a derivative of a hydroxy group-containing compound, which are contained in the acidic gas removing agent of the present invention, preferably reaches 0.1 to 100.0 mol, more preferably reaches 0.1 to 10.0 mol per 1 mol of carbon dioxide in a gas. In the method of processing by circulating a gas in a container packed with the acidic gas removing agent, the amount of the acidic gas removing agent to be added is adjusted so that the total loading of the one or more compounds selected from the group consisting of a hydroxy group-containing compound and a derivative of a hydroxy group-containing compound per 1 mol of carbon dioxide in a gas to be circulated can fall within the range.

The temperature in processing by bringing the acidic gas removing agent into contact with a gas is in the range preferably of 0 to 200°C, more preferably of 25 to 60°C. The pressure in performing the processing is in the range typically of 0.7 to 7.0 MPa, preferably of 2.0 to 5.0 MPa.

The gas to be treated is an acidic gas containing carbon dioxide, and may further contain hydrogen sulfide or the like as another acidic gas, and nitrogen, oxygen, hydrogen, water, and so on. The acidic gas removing agent of the present invention exerts favorable carbon dioxide removal effect even in the case that water is contained in the gas to be processed. If water is contained in the gas to be processed, the water content as liquid is preferably 0.5 to 20.0 vol%, and more preferably 1.0 to 15.0 vol% for favorable carbon dioxide removal effect.

The acidic gas removing method of the present invention can be carried out by means of, for example, passing a gas through an absorption device packed with the acidic gas removing agent of the present invention. The absorption device to be used is set in a cleaning device that is commonly used in gas cleaning processes. Examples of objects to be removed through gas cleaning processes include not only acidic gasses such as carbon dioxide and hydrogen sulfide but also dust and odor. Examples of the gas cleaning device include a tower with random packing or ordered packing, a tower with trays, a membrane contactor, a radial-flow scrubber, a jet scrubber, a Venturi scrubber, and a rotary-spray scrubber.

## Examples

Hereinafter, the present invention will be described in more detail with reference to Examples; however, the present invention is not limited to those Examples.

### [Evaluation methods and measurement methods]

<Number-average molecular weight>

The number-average molecular weight of each hydroxy group-containing compound was a molecular weight in terms of hydroxyl value calculated from the expression "56,100 / (hydroxyl value of hydroxy group-containing compound) × (number of terminal groups in hydroxy group-containing compound)", wherein the hydroxyl value was determined in accordance with JIS K 1557-1:2007.

The number-average molecular weight of each derivative of a hydroxy group-containing compound was measured through gel permeation chromatography (GPC) under the following measurement conditions.

(Measurement conditions)

- Apparatus used: "HLC-8320GPC", manufactured by Tosoh Corporation
- Columns used: the following two types of columns connected in series in order were used. "TSKgel (R) SuperHZ4000", manufactured by Tosoh Corporation, two columns "TSKgel (R) SuperHZ2500", manufactured by Tosoh Corporation, two columns
- Column temperature: 40°C
- Detector: differential refractive index (RI) detector
- Eluent: tetrahydrofuran
- Flow rate :0.35 mL/min
- Sample concentration: 0.5% by mass
- Sample injection volume: 20 μL
- Standards: polystyrene

<Amounts of carbon dioxide absorption>

A 300-mL pressure-resistant container (A) connected to a carbon dioxide cylinder by piping, and a 150-mL pressure-resistant container were prepared, and amounts of carbon dioxide absorption were determined through a procedure of (i) to (iv) shown below. A regulator and a pressure gage were connected between the carbon dioxide cylinder and pressure-resistant container (A), and pressure-resistant container (A) and pressure-resistant container (B) were soaked in a water bath.

(i) The temperature of the water bath was set to 30°C, and pressure-resistant container (B) containing 50 mL of a test liquid was degassed under reduced pressure with a vacuum pump.
(ii) Pressure-resistant container (A) was filled with carbon dioxide depressurized to 0.20 MPa through the regulator, and the pressure at that time was measured. Thereafter, pressure-resistant container (A) and pressure-resistant container (B) were connected together, and the pressure after 1 hour was measured. Assuming that carbon dioxide in an amount corresponding to the reduction of pressure was absorbed in the test liquid, the amount in moles of adsorbed carbon dioxide per unit mass (mol/kg) was calculated.
(iii) The same operation as (ii) was performed at 0.35 MPa, 0.50 MPa, 0.60 MPa, and 0.80 MPa, and the Henry's constant, Hb (MPa·kg/mol), which indicates the pressure dependence of the amount in moles of adsorbed carbon dioxide (mol/kg), was calculated.
(iv) The amount of carbon dioxide absorption per unit mass of the test liquid (g/kg) was calculated from the following expression:

Amount of carbon dioxide absorption per unit mass of test liquid (g/kg) = P (MPa) $\times$ n / Hb (MPa·kg/mol)

n: molar mass of carbon dioxide = 44 (g/mol).

In the calculation, P (MPa) was 3.0 MPa, which is a representative condition for using physical absorption liquid.

For the case that an acidic gas removing agent (100% by mass of compound) was used as a test liquid (not in coexistence of water) and the case that a mixture of 90% by mass of the acidic gas removing agent (compound) and 10% by mass of water was used as a test liquid (in the coexistence of water), the amounts of carbon dioxide absorption in the test liquids were determined.

<Carbon dioxide absorption ratio>

The carbon dioxide absorption ratio is the ratio (b / a) of the amount of carbon dioxide absorption per unit mass of a mixture of 90% by mass of an acidic gas removing agent and 10% by mass of water, b (g/kg), to the amount of carbon dioxide absorption per unit mass of the acidic gas removing agent, a (g/kg).

<Solubility parameter S (LogS)>

The solubility parameter (LogS) of each compound was determined by the above-described approach.

[Synthesis of compounds (polymers)]

<Synthesis Example 1>

In a reactor equipped with a stirring blade, a distillate trap, and a pressure regulator, 2391 g of propylene oxide was polymerized with use of 815 g n-butanol as an initiator in the presence of a potassium hydroxide (KOH) catalyst, and the resultant was then neutralized and had neutralized salts removed to give polymer (A-1) (hydroxyl value: 187 mg KOH/g, number-average molecular weight: 300, number of constituent units based on propylene oxide (number of PO units): 4) as polyoxyalkylene glycol.

<Synthesis Example 2>

In a reactor equipped with a stirring blade, a distillate trap, and a pressure regulator, 2000 g of polymer (A-1) was charged.

Then, 28% by mass methanol solution of sodium methoxide (NaOMe) was added in such a manner that 1.1 mol of NaOMe was added per 1 mol of hydroxy groups of polymer (A-1), the resultant was warmed to 70°C, and nitrogen was flowed therein to distill off methanol under normal pressure. Thereafter, the temperature was increased to 130°C, and stirring was performed under a reduced pressure of -0.1 MPaG for 4 hours to distill off methanol, converting polymer (A-1)

into sodium alkoxide.

The temperature was then decreased to 100°C, thereafter 1.1 mol of chloromethane per 1 mol of sodium of sodium alkoxide was sequentially added at a charging rate of 400 g/hr, and reacted at 100°C for 2 hours. Thereafter, unreacted chloromethane was distilled off by stirring and mixing under a reduced pressure of -0.1 MPaG at 100°C for 0.5 hours to give a crude product, in which the hydroxy groups of polymer (A-1) had been methoxylated.

Then, 2000 g of distilled water was added to the reactor, and the resultant was stirred and mixed for 15 minutes to cause oil-water separation of neutralized salts. Only the oil layer was extracted, 4 parts by mass of an adsorbent was added to 100 parts by mass of the oil layer, the temperature was increased to 120°C, and the oil layer was then stirred and mixed under a reduced pressure of -0.1 MPaG for 1.5 hours. The adsorbent was filtered off to give polymer (B-1) (number-average molecular weight: 476, number of PO units: 7) as a terminus-methylated derivative of polymer (A-1).

<Synthesis Example 3>

In a reactor equipped with a stirring blade, a distillate trap, and a pressure regulator, 1926 g of propylene oxide was polymerized with use of 1340 g of ethylene glycol monobutyl ether (1-mol ethylene oxide adduct of n-butanol) as an initiator in the presence of a KOH catalyst, and the resultant was then neutralized and had neutralized salts removed to give polymer (A-2) (hydroxyl value: 188 mg KOH/g, number-average molecular weight: 299, number of PO units: 3) as polyoxyalkylene glycol.

<Synthesis Example 4>

Polymer (B-2) (number-average molecular weight: 437, number of PO units: 5) as a terminus-methylated derivative of polymer (A-2) was obtained in the same manner as in Synthesis Example 2 except that 2000 g of polymer (A-2) was charged in place of polymer (A-1).

<Synthesis Example 5>

In a reactor equipped with a stirring blade, a distillate trap, and a pressure regulator, propylene oxide was polymerized with use of diethylene glycol monobutyl ether (2-mol ethylene oxide adduct of n-butanol) as an initiator in the presence of a KOH catalyst, and the resultant was then neutralized and had neutralized salts removed to give polymer (A-3) (hydroxyl value: 175 mg KOH/g) as polyoxyalkylene monool.

Polymer (B-3) (number-average molecular weight: 476, number of PO units: 5) as a terminus-methylated derivative of polymer (A-3) was obtained in the same manner as in Synthesis Example 2 except that 2000 g of polymer (A-3) was charged in place of polymer (A-1).

<Synthesis Example 6>

In a reactor equipped with a stirring blade, a distillate trap, and a pressure regulator, propylene oxide was polymerized with use of ethylene glycol mono-tert-butyl ether (1-mol ethylene oxide adduct of tert-butanol) as an initiator in the presence of a KOH catalyst, and the resultant was then neutralized and had neutralized salts removed to give polymer (A-4) (hydroxyl value: 176 mg KOH/g) as polyoxyalkylene monool.

Polymer (B-4) (number-average molecular weight: 479, number of PO units: 6) as a terminus-methylated derivative of polymer (A-4) was obtained in the same manner as in Synthesis Example 2 except that 2000 g of polymer (A-4) was charged in place of polymer (A-1).

<Synthesis Example 7>

In a reactor equipped with a stirring blade, a distillate trap, and a pressure regulator, propylene oxide was ring-open-polymerized with use of methanol as an initiator in the presence of a NaOH catalyst, and the resultant was then neutralized and had neutralized salts removed to give polymer (A-5) (hydroxyl value: 171 mg KOH/g) as polyoxyalkylene monool.

Polymer (B-5) (number-average molecular weight: 496, number of PO units: 7) as a terminus-allylated derivative of polymer (A-5) was obtained in the same manner as in Synthesis Example 2 except that 2000 g of polymer (A-5) was charged in place of polymer (A-1), 1.1 mol of allyl chloride per 1 mol of hydroxy groups of polymer (A-5) was charged in place of chloromethane, the resultant was warmed to 85°C and then reacted for 5 hours, thereafter the temperature was increased to 100°C, and unreacted allyl chloride was distilled off by stirring and mixing under a reduced pressure of -0.1 MPaG for 0.5 hours.

<Synthesis Example 8>

In a reactor equipped with a stirring blade, a distillate trap, and a pressure regulator, propylene oxide was ring-open-polymerized with use of propylene glycol as an initiator in the presence of a KOH catalyst, and the resultant was then neutralized and had neutralized salts removed to give polymer (A-6) as polyoxyalkylene glycol.

Polymer (B-6) (number-average molecular weight: 437, number of PO units: 7) as a terminus-methylated derivative of polymer (A-6) was obtained in the same manner as in Synthesis Example 2 except that 2000 g of polymer (A-6) was charged in place of polymer (A-1).

<Synthesis Example 9>

In a reactor equipped with a stirring blade, a distillate trap, and a pressure regulator, propylene oxide was ring-open-polymerized with use of ethylene glycol monoisopropyl ether as an initiator in the presence of a KOH catalyst, and the resultant was then neutralized and had neutralized salts removed to give polymer (A-7) as polyoxyalkylene glycol.

Polymer (B-7) (number-average molecular weight: 486, number of PO units: 6) as a terminus-methylated derivative of polymer (A-7) was obtained in the same manner as in Synthesis Example 2 except that 2000 g of polymer (A-7) was charged in place of polymer (A-1).

<Synthesis Example 10>

In a reactor equipped with a stirring blade, a distillate trap, and a pressure regulator, 3235 g of propylene oxide was polymerized with use of 765 g of propylene glycol as an initiator in the presence of a KOH catalyst, and the resultant was then neutralized and had neutralized salts removed to give polymer (A-8) (hydroxyl value: 282 mg KOH/g, number-average molecular weight: 398, number of PO units: 7) as polyoxyalkylene glycol.

<Evaluation results>

Table 1 shows the theoretical structural formulas of the compounds (polymers) used for test liquids, and measurement results for the number-average molecular weights, LogS, and amounts of carbon dioxide absorption.

Examples 1 to 8 are working examples, and Examples 9 to 13 are comparative examples. The compound of Example 11, (C-1), is polyethylene glycol dimethyl ether (DMPEG) (manufactured by Tokyo Chemical Industry Co., Ltd.; number-average molecular weight: 282, number of constituent units based on ethylene oxide: 5), the compound of Example 12, (C-2), is tripropylene glycol (TPG) (manufactured by AGC Inc.; number-average molecular weight: 185, number of PO units: 3), and the compound of Example 13, (C-3), is PTMG250 (manufactured by Mitsubishi Chemical Corporation; number-average molecular weight: 230, number of constituent units based on tetrahydrofuran: 3).

[Table 1]

| Example | Compound (polymer) | Theoretical structural formula | Number-average molecular weight | Amount of carbon dioxide absorption | | | LogS |
|---|---|---|---|---|---|---|---|
| | | | | Not in coexistence of water a (g/kg) | In coexistence of water b (g/kg) | Ratio b/a | |
| 1 | A-1 | 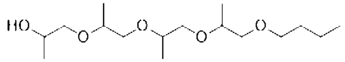 | 300 | 132 | 112 | 0.85 | -2.36 |
| 2 | B-1 | 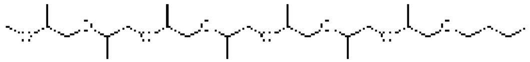 | 476 | 134 | 120 | 0.89 | -4.15 |
| 3 | B-2 | 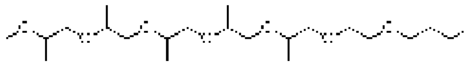 | 437 | 157 | 140 | 0.89 | -3.86 |
| 4 | B-3 | 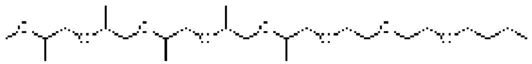 | 476 | 149 | 134 | 0.90 | -3.83 |
| 5 | B-4 | 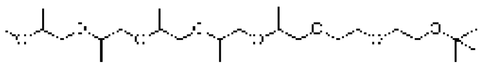 | 479 | 142 | 128 | 0.90 | -4.38 |
| 6 | B-5 | 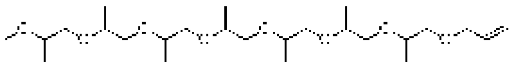 | 496 | 129 | 120 | 0.93 | -4.2 |
| 7 | B-6 | 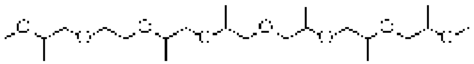 | 437 | 144 | 122 | 0.85 | -3.31 |
| 8 | B-7 | 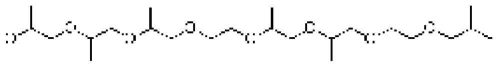 | 486 | 140 | 139 | 0.99 | -4.28 |
| 9 | A-2 | 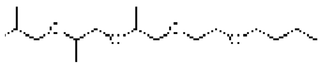 | 299 | 128 | 98 | 0.77 | -1.71 |
| 10 | A-8 | 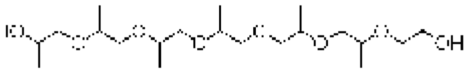 | 398 | 104 | 79 | 0.76 | -2.22 |
| 11 | C-1 | 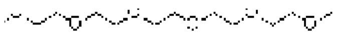 | 282 | 181 | 130 | 0.72 | 0.05 |
| 12 | C-2 | 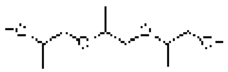 | 185 | 92 | 65 | 0.71 | 0.55 |

(continued)

| Example | Compound (polymer) | Theoretical structural formula | Number-average molecular weight | Amount of carbon dioxide absorption | | | LogS |
|---|---|---|---|---|---|---|---|
| | | | | Not in coexistence of water a (g/kg) | In coexistence of water b (g/kg) | Ratio b/a | |
| 13 | C-3 | 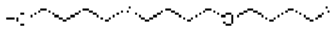 | 230 | 72 | 56 | 0.78 | -1.14 |

As understood from Table 1, hydroxy group-containing compounds or derivatives of such hydroxy group-containing compounds each having a number-average molecular weight of less than 500 and containing constituent units each having 3 or more carbon atoms and one or more oxygen atoms less tended to undergo reduction in amounts of carbon dioxide absorption in the coexistence of water and exhibited high carbon dioxide absorption ratios in the case where LogS was -2.25 or less. That is, they were found to allow the amount of carbon dioxide absorption to be maintained even when water was coexisting, and undergo small variation in amounts of carbon dioxide absorption from those not in the coexistence of water.

## Claims

**1.** An acidic gas removing agent for removing carbon dioxide in a gas, wherein

the acidic gas removing agent comprises one or more compounds selected from the group consisting of a hydroxy group-containing compound and a derivative of the hydroxy group-containing compound, and
each of the hydroxy group-containing compound and the derivative of the hydroxy group-containing compound has a number-average molecular weight of less than 500, comprises a constituent unit having 3 or more carbon atoms and one or more oxygen atoms, and has a solubility parameter (LogS) value of -2.25 or less.

**2.** The acidic gas removing agent according to claim 1, wherein the constituent unit is a constituent unit based on an alkylene oxide having 3 or more carbon atoms.

**3.** The acidic gas removing agent according to claim 2, wherein the alkylene oxide is propylene oxide.

**4.** The acidic gas removing agent according to claim 1 or 2, wherein the derivative of the hydroxy group-containing compound is a compound resulting from conversion of a hydroxy group terminus of the hydroxy group-containing compound into the following formula (1):

$$-O-R \qquad (1)$$

wherein, in the formula (1), R represents a monovalent organic group having 1 to 4 carbon atoms, being optionally branched, optionally having an unsaturated bond, and optionally comprising at least either one of a nitrogen atom and an oxygen atom.

**5.** The acidic gas removing agent according to claim 1 or 2, wherein a and b satisfy the following expressions (2) and (3):

$$a \geq 100 \qquad (2)$$

$$b / a \geq 0.80 \qquad (3)$$

wherein a represents an amount of carbon dioxide absorption per unit mass of the acidic gas removing agent (g/kg), and b represents an amount of carbon dioxide absorption per unit mass of a mixture of 90% by mass of the acidic gas removing agent and 10% by mass of water (g/kg), each at 30°C and 3 MPa.

**6.** The acidic gas removing agent according to claim 1 or 2, being free from an amine compound.

**7.** The acidic gas removing agent according to claim 1 or 2, wherein the acidic gas removing agent is used for removing carbon dioxide in a gas through a physical absorption method.

**8.** The acidic gas removing agent according to claim 1 or 2, wherein the acidic gas removing agent is liquid at room temperature.

**9.** An acidic gas removing method, wherein the acidic gas removing agent according to claim 1 or 2 is brought into contact with the gas to remove carbon dioxide in the gas.

**10.** The acidic gas removing method according to claim 9, wherein the acidic gas removing agent is brought into contact

with the gas at a temperature ranging from 0 to 200°C.

**11.** The acidic gas removing method according to claim 10, wherein the acidic gas removing agent is brought into contact with the gas at a pressure ranging from 0.7 to 7.0 MPa.

**12.** An absorption device packed with the acidic gas removing agent according to claim 1 or 2.

**13.** A cleaning device provided with the absorption device according to claim 12.

**INTERNATIONAL SEARCH REPORT**

International application No. **PCT/JP2023/040729**

**A. CLASSIFICATION OF SUBJECT MATTER**

***B01D 53/14***(2006.01)i; ***C08G 65/02***(2006.01)i
FI: B01D53/14 210; C08G65/02

According to International Patent Classification (IPC) or to both national classification and IPC

**B. FIELDS SEARCHED**

Minimum documentation searched (classification system followed by classification symbols)

B01D53/14; C08G65/02

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

CAplus/REGISTRY (STN)

**C. DOCUMENTS CONSIDERED TO BE RELEVANT**

| Category* | Citation of document, with indication, where appropriate, of the relevant passages | Relevant to claim No. |
|---|---|---|
| A | JP 63-162016 A (NIPPON SHOKUBAI KAGAKU KOGYO CO., LTD.) 05 July 1988 (1988-07-05) | 1-13 |
| A | JP 2013-111550 A (OSAKA GAS CO., LTD.) 10 June 2013 (2013-06-10) | 1-13 |
| A | JP 2016-523691 A (UOP LLC) 12 August 2016 (2016-08-12) | 1-13 |
| A | WO 2020/153005 A1 (MITSUBISHI HEAVY INDUSTRIES ENGINEERING, LTD.) 30 July 2020 (2020-07-30) | 1-13 |
| A | KR 10-2445742 B1 (CE TEK CO., LTD.) 21 September 2022 (2022-09-21) | 1-13 |
| P, A | WO 2023/062993 A1 (AGC INC.) 20 April 2023 (2023-04-20) | 1-13 |

☐ Further documents are listed in the continuation of Box C. ☑ See patent family annex.

* Special categories of cited documents:
"A" document defining the general state of the art which is not considered to be of particular relevance
"D" document cited by the applicant in the international application
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **04 January 2024** | **16 January 2024** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | Telephone No. |

Form PCT/ISA/210 (second sheet) (July 2022)

**INTERNATIONAL SEARCH REPORT**
**Information on patent family members**

International application No.
**PCT/JP2023/040729**

| Patent document cited in search report | Publication date (day/month/year) | Patent family member(s) | Publication date (day/month/year) |
| --- | --- | --- | --- |
| JP 63-162016 A | 05 July 1988 | (Family: none) | |
| JP 2013-111550 A | 10 June 2013 | (Family: none) | |
| JP 2016-523691 A | 12 August 2016 | US 2014/0319419 A1 | |
| | | US 2014/0318370 A1 | |
| | | WO 2014/178991 A1 | |
| | | EP 2991752 A1 | |
| | | CN 105142756 A | |
| WO 2020/153005 A1 | 30 July 2020 | US 2022/0096996 A1 | |
| | | EP 3892586 A1 | |
| | | CA 3127297 A1 | |
| | | JP 2020-116528 A | |
| KR 10-2445742 B1 | 21 September 2022 | (Family: none) | |
| WO 2023/062993 A1 | 20 April 2023 | (Family: none) | |

Form PCT/ISA/210 (patent family annex) (July 2022)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 59216831 A
- WO 2003062301 A
- WO 2004067633 A
- JP 2004269776 A
- JP 2005015786 A
- WO 2013065802 A
- JP 2015010162 A
- JP 2012077280 A
- JP 2014080590 A
- JP 2015091937 A
- JP 2001270938 A
- JP 2010126591 A
- JP H2289616 A
- JP H4239023 A


### Non-patent literature cited in the description


- **SORKUN, M. C et al.** *Scientific Data*, 2019, vol. 6, 143